# EUROPEAN PATENT SPECIFICATION

(11) **EP 3 952 227 B1**
(45) Date of publication and mention of the grant of the patent: **04.11.2026**
(21) Application number: 20831602.6
(22) Date of filing: 06.05.2020
(51) Int. Cl.: H04L 45/64, H04L 12/46, H04L 101/622, H04L 49/354

(54) **NETWORK SLICE-BASED DATA PROCESSING METHOD AND APPARATUS**
NETZWERK SLICE-BASIERTES DATENVERARBEITUNGSVERFAHREN UND -GERÄT
PROCÉDÉ ET APPAREIL DE TRAITEMENT DE DONNÉES BASÉ SUR UNE TRANCHE DE RÉSEAU

(30) Priority: 28.06.2019 CN 201910580239
(43) Date of publication of application: 09.02.2022
(73) Proprietor: ZTE Corporation, Shenzhen, Guangdong 518057 (CN)
(72) Inventor: ZHANG, Kui, Shenzhen, Guangdong 518057 (CN)
(74) Representative: Gevers Patents
(86) International application number: PCT/CN2020/088758
(87) International publication number: WO 2020/259085

(56) References cited:
- EP-A1- 2 592 789
- WO-A1-2018/231197
- WO-A1-2019/114988
- CN-A- 101 035 050
- CN-A- 103 746 943
- CN-A- 104 378 297
- CN-A- 107 278 362
- CN-A- 108 989 915
- US-A1- 2007 171 918

## Description

### TECHNICAL FIELD

The embodiments of the present disclosure relate to, but are not limited to, the field of access network communication technology, in particular to a data processing method based on network slices and an apparatus therefor.

### BACKGROUND

With the development of virtualization technology, network slice technology may encounter some restrictions that affect service provisioning in the application and popularization of access devices.

When network slices are deployed on an existing network, the number of uplink ports or uplink lines of an access node may be insufficient so that it is impossible to allocate an independent uplink channel for each network slice. Therefore, it is desired that multiple network slices share one or a group of uplink ports. In an exclusive mode of the port, the port may only serve one certain network slice, and the data flow sent and received by the port belongs to the network slice where the port is located. In a sharing mode of the port, the port is shared by multiple network slices. Unlike the exclusive mode, it is impossible in the sharing mode to directly determine the network slice to which the service data flow belongs according to the port. Therefore, it is necessary to assign a virtual local area network (VLAN) available on the shared port for each of the network slices. Then, when the shared port receives a data message, the network slice to which the data flow belongs may be identified according to outer VLAN information of the data message, and the data flow may continue to be forwarded in the identified network slice. In other words, in the sharing mode of the port, different network slices are unable to use the same VLAN on the shared port.

However, before the network slice is enabled, a user put all physical network elements under a unified VLAN for management, while network slice technology generates multiple virtualized logical devices on one physical device. Therefore, the user may expect the physical device to be consistent in management with the logical devices, that is, all devices may be managed using the same VLAN.

It can be seen that the network slices sharing the uplink channel require not to use the same VLAN on the shared uplink port, but the user requires to use the same VLAN to manage all physical and logical network elements. These two requirements are conflicting. The flexibility of networking and even network planning for the user will be affected if these two requirements are unable to be met at the same time.

US2007/171918 A1 discloses a frame forwarding apparatus connected between an ISP router and a plurality of subscriber terminals. The frame forwarding apparatus comprises a frame forwarding processing unit and a VLAN bundling table defining the correspondence of subscriber side line information with ISP router side line information and subscriber terminal's MAC address. The subscriber side line information includes a physical line number and a subscriber VLAN identifier, and the ISP router side line information includes a physical line number connected to the ISP router and a group VLAN identifier. By referring to the VLAN bundling table, the frame forwarding processing unit operates to convert a VLAN identifier given in a frame received from a subscriber terminal into a group VLAN identifier and to convert a VLAN identifier given in a frame received from the ISP router into a subscriber VLAN identifier, before forwarding the frame to its destination.

EP 2592789 A1 discloses that interdomain federation, for example, generation or management of a virtual network (slice) that extends among domains can be performed without changing a function of a server or a node (103; 104; 113; 114; 123; 124) of a network domain without a function to manage the other domain. A pseudo node (105; 106; 115; 116; 125; 126) receiving a management message with the same protocol as a general node is added, in interdomain management information from an own domain, the other domain part in management information is received as the management information by the pseudo node (105; 106; 115; 116; 125; 126)) (the other domain part is concealed) and when interdomain management information is transmitted to the other domain through the pseudo node (105; 106; 115; 116; 125; 126) by a federation protocol and the pseudo node (105; 106; 115; 116; 125; 126) and the interdomain management information is received from the other domain, the other domain part in the management information is bound as the management information of the pseudo node (105; 106; 115; 116; 125; 126) (the other domain part is concealed) and transmitted to a management server of an own domain.

### SUMMARY

In one aspect, the present disclosure provides data processing method based on network slices which is defined by independent claim 1.

In another aspect, the present disclosure provides a data processing apparatus based on network slices which is defined by independent claim 7.

In still another aspect, the present disclosure provides a computer-readable storage medium which is defined by independent claim 8.

Further advantages embodiments of the present disclosure are indicated in the dependent claims.

It is to be understood that both the forgoing general description and the following detailed description are exemplary only, and are not restrictive of the present disclosure.

### BRIEF DESCRIPTION OF THE DRAWINGS

The accompanying drawings are used to provide a further understanding of the technical solution of the present disclosure, and constitute a part of the specification. Together with the embodiments of the present disclosure, the accompanying drawings are used to explain the technical solution of the present disclosure, and do not constitute a limitation to the technical solution of the present disclosure.
FIG. 1 is a schematic diagram of a data processing apparatus based on network slices according to an embodiment of the present disclosure.
FIG. 2 is a schematic diagram of collaboration among units when an uplink port is in a non-sharing mode.
FIG. 3 is a flowchart of a data processing method based on network slices according to an embodiment of the present disclosure.

### DETAILED DESCRIPTION

In order to make the purpose, the technical solution, and the advantages of the present disclosure clearer, embodiments of the present disclosure will be described in detail below with reference to the accompanying drawings. It should be noted that the embodiments in the present disclosure and the features in the embodiments may be combined with each other arbitrarily in a condition without conflict.

The steps shown in the flowchart of the accompanying drawings may be performed in a computer system storing a set of computer-executable instructions. And, although a logical sequence is shown in the flowchart, in some cases, the steps shown or described may be performed in an order other than that described herein.

Embodiments of the present disclosure provide a data processing method based on network slices and an apparatus therefor, applicable to an access node employing a network slice technology. The method and apparatus provided in the embodiments of the present disclosure can effectively support the network slices to use a same virtual local area network (VLAN) on an uplink port shared by the network slices.

Embodiments of the present disclosure provide a data processing apparatus based on network slices, including: a forwarding plane network slice identification unit and a plurality of network slice forwarding plane processing units. Herein, the forwarding plane network slice identification unit is configured to determine on a data plane a network slice to which a data flow belongs according to network slice resource information, an uplink port receiving the data flow, VLAN information carried by the data flow, and a destination media access control (MAC) address of the data flow. One of the plurality of network slice forwarding plane processing unit corresponding to the network slice to which the data flow belongs is configured to process and forward the data flow. Herein, different network slices sharing a VLAN on a shared uplink port are configured with different layer-3 interface MAC addresses in the network slice resource information.

Herein, the access node may include a control plane and a data plane. The control plane is responsible for processing of local protocol and management and maintenance of forwarding information database, including generating, managing and maintaining the forwarding information database required by the data plane. The data plane is responsible for processing and forwarding of a service data flow according to the forwarding information database issued by the control plane.

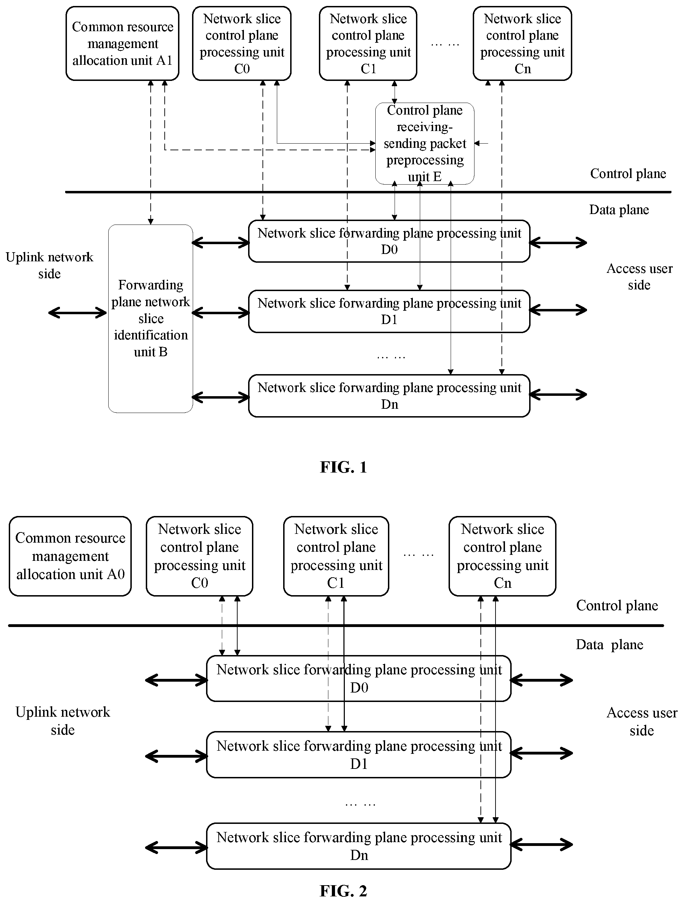

FIG. 1 is a schematic diagram of a data processing apparatus based on network slices according to an embodiment of the present disclosure. As shown in FIG. 1, the apparatus provided in this embodiment is applicable to an access node, including: a common resource management and allocation unit A1, a forwarding plane network slice identification unit B, a plurality of network slice forwarding plane processing units D0 to Dn, a control plane sending-receiving packet preprocessing unit E and a plurality of network slice control plane processing units C0 to Cn. Herein, the forwarding plane network slice identification unit B is located on a receiving side of an uplink network. In FIG. 1, thick black lines with arrows indicate service data flow transmission, thin black lines indicate protocol packet transmission, and dashed lines indicate control flow transmission.

It should be noted that, since the embodiment of the present disclosure does not involve an control plane protocol processing and a forwarding plane data forwarding processing intrinsically inside the network slice, the processing of any network slice may be simplified as the following two parts in FIG. 1: the network slice control plane processing unit and the network slice forwarding plane processing unit. Herein, the network slice control plane processing unit Cn represents a control plane processing unit of a network slice numbered n, and the network slice forwarding plane processing unit Dn represents a forwarding plane processing unit of the network slice numbered n, where n may be a positive integer.

In this exemplary embodiment, the common resource management and allocation unit A1 is responsible for the management and allocation of resources (for example, ports, VLANs available for ports, etc.), and may, through command configuration, allocate resources to any network slice, or retrieve resources from any network slice.

In this exemplary embodiment, the common resource management and allocation unit A1 may allocate resources to any network slice through the command configuration, and send the network slice resource information to the forwarding plane network slice identification unit B and the control plane sending-receiving packet preprocessing unit E. In an example, the network slice resource information may include: information of the network slice to which the uplink port belongs, information (for example, VLAN identification) of the VLAN used on the shared uplink port by different network slices, information of the VLAN shared by different network slices, and the layer-3 interface MAC addresses corresponding to different network slices that share the VLAN on the shared uplink port.

In this exemplary embodiment, the forwarding plane network slice identification unit B may, when receiving the service data flow, determine the network slice to which the service data flow belongs according to the network slice resource information sent by the common resource management and allocation unit A1. The network slice forwarding plane processing unit Dn may process and forward the service data flow belonging to the corresponding network slice n, and the network slice forwarding plane processing unit Dn may upload a layer-3 protocol packet that needs to be processed by the control plane of the access node to the control plane sending-receiving packet preprocessing unit E. The control plane sending-receiving packet preprocessing unit E may identify protocol packets received on the VLAN shared by multiple network slices on the shared uplink port, and copy broadcast or multicast protocol packets among the protocol packets to the network slice control plane processing units corresponding to the network slices sharing the uplink port and the VLAN (for example, the network slice control plane processing unit Cn corresponding to the network slice n). In this way, the same VLAN may be used to run layer-3 service on a shared uplink port of multiple network slices, thus meeting the requirement that the shared uplink port of multiple network slices uses the same VLAN to manage network elements.

FIG. 2 is a schematic diagram of collaboration among units when the uplink port is in a non-sharing mode. As shown in FIG. 2, the access node may include: a common resource management and allocation unit A0, the network slice control plane processing units C0 to Cn, and the network slice forwarding plane processing units D0 to Dn. In FIG. 2, thick black lines with arrows indicate the service data flow transmission, thin black lines indicate the protocol packet transmission, and dashed lines indicate the control flow transmission. The related description for the network slice control plane processing units and the network slice forwarding plane processing units may refer to the description with respect to FIG. 1, which will not be repeated here. As shown in FIG. 2, when the uplink port is not shared (that is, one uplink port may only belong to one certain network slice), with clear resource attribution, the service data flow is directly processed on the network slice forwarding plane processing unit corresponding to the network slice to which the uplink port belongs, and the protocol packet is processed on the network slice control plane processing unit corresponding to the network slice to which the uplink port belongs.

Compared with FIG. 2, in the access node shown in FIG. 1, with the additional forwarding plane network slice identification unit B on the data plane and the additional control plane sending-receiving packet preprocessing unit E on the control plane for supporting corresponding processing, it is thus supported that multiple network slices share the uplink port and the VLAN.

The data processing method based on the network slice provided in an embodiment of the present disclosure will be exemplarily described with reference to FIG. 1. The method provided by this exemplary embodiment includes the following processing.

In a first step, the common resource management and allocation unit A1 allocates resources to each network slice through the command configuration, including allocating uplink ports in an exclusive or a shared manner, and assigning the VLANs available on the shared uplink port for different network slices. In this step, different network slices have different VLANs available on the shared uplink port.

In a second step, the common resource management and allocation unit A1 assign, through the command configuration, a VLAN to be shared by different network slices on the shared uplink port. It should be noted that the VLAN assigned to be shared needs to be allocated to one certain network slice in the first step, other network slices may also use the VLAN on the shared port. In the following, the network slice to which the VLAN belongs is the network slice to which the VLAN is allocated in the first step.

In a third step, the common resource management and allocation unit A1 performs an intra-slice service configuration for each network slice, which may include configuring the layer-3 interface MAC address for the VLAN shared on the shared uplink port. It should be noted that the layer-3 interface MAC addresses on the shared uplink port for different network slices are different. In this way, in the case that the network slices use the same VLAN on the shared port, the network slices may be identified by the layer-3 interface MAC addresses.

In a fourth step, the common resource management and allocation unit A1 sends port ownership information, the VLANs available on the shared uplink port for different network slices, the VLAN shared by different network slices, and the layer-3 interface MAC addresses corresponding to the VLAN shared by different network slices (corresponding to the above-mentioned network slice resource information) to the forwarding plane network slice identification logic unit B and the control plane sending-receiving packet preprocessing unit E. Herein, the port ownership information may indicate the network slice to which the uplink port belongs.

In a fifth step, when the uplink port receives the service data flow, the forwarding plane network slice identification unit B performs analysis to determine the network slice to which the service data flow belongs. Herein, the forwarding plane network slice identification unit B first analyzes a situation of the network slice to which the uplink port belongs. If the uplink port is exclusive to one certain network slice, the forwarding plane network slice identification unit B directly determines the network slice to which the service data flow belongs (for example, network slice n) according to the uplink port ownership information, and send the service data flow to the network slice forwarding plane processing unit (for example, the network slice forwarding plane processing unit Dn) corresponding to the determined network slice for continuing processing. If the uplink port is shared by multiple network slices, the next step is performed.

In a sixth step, when the uplink port is shared by multiple network slices, the forwarding plane network slice identification unit B may extract outer VLAN information of a data packet of the service data flow, and analyzes the ownership of the VLAN indicated by the outer VLAN information. If the VLAN is exclusive to a certain network slice, that is, the VLAN only belongs to the certain network slice, the forwarding plane network slice identification unit B may determine the network slice to which the service data flow belongs according to the ownership of the VLAN, and send the service data flow to the network slice forwarding plane processing unit corresponding to the determined network slice for continuing processing. Otherwise, if the VLAN is shared by multiple network slices, the next step is performed.

In a seventh step, if the VLAN is shared by multiple network slices, the forwarding plane network slice identification unit B may first record the network slice to which the VLAN belongs. Herein, the forwarding plane network slice identification unit B may determine the network slice to which the VLAN is assigned according to the allocation information in the first step, and record the network slice as the network slice to which the VLAN belongs. It should be noted that in the first step, the VLAN on the shared uplink port is only assigned to one network slice.

In this step, the forwarding plane network slice identification unit B may extract the destination MAC address of a service flow data packet, and then search for a matching entry in the network slice resource information according to the VLAN information carried in the service data packet and the extracted destination MAC address, that is, to determine whether there is network slice information (for example, the serial number of the network slice) corresponding to the VLAN information and the destination MAC address. If there is no matching entry, that is, no corresponding network slice is matched according to the VLAN information and the destination MAC address, the forwarding plane network slice identification unit B determines the recorded network slice to which the VLAN belongs as the network slice to which the service data flow belongs, and send the service data flow to the network slice forwarding plane processing unit corresponding to the determined network slice for continuing processing. If there is a matching entry, the next step is performed.

In an eighth step, when determining a network slice matching the VLAN information and MAC address, the forwarding plane network slice identification unit B determines the matched network slice as the network slice to which the service data flow belongs, and sends the service data flow to the network slice forwarding plane processing unit corresponding to the determined network slice for continuing processing.

In a ninth step, the network slice forwarding plane processing unit corresponding to the determined network slice processes and forwards the received service data flow. For layer-2 service, the network slice forwarding plane processing unit may directly forward the service data flow.

In this exemplary embodiment, when the layer-3 service is enabled, the network slice forwarding plane processing unit may upload the layer-3 protocol packet that needs to be processed by the control plane to the control plane sending-receiving packet preprocessing unit E.

In a tenth step, after receiving the protocol packet from the data plane, the control plane sending-receiving packet preprocessing unit E first checks the uplink port receiving the protocol packet and the VLAN information carried in the protocol packet. For the VLAN on the shared uplink port shared by multiple network slices, the control plane sending-receiving packet preprocessing unit E searches for a list of network slices that share the uplink port and the VLAN.

In this step, since the common resource management and allocation unit A1 also sends the network slice resource information to the control plane sending-receiving packet preprocessing unit E, the control plane sending-receiving packet preprocessing unit E may determine, according to the network slice resource information, whether the uplink port receiving the protocol packet and the VLAN indicated by the VLAN information carried in the protocol packet are shared by multiple network slices.

In an eleventh step, the control plane sending-receiving packet preprocessing unit E extracts a destination address of the protocol packet. If the destination address of the protocol packet is a broadcast or multicast (such as ARP (Address Resolution Protocol) packet, routing protocol packet) address, the control plane sending-receiving packet preprocessing unit E copies the protocol packet and sends the protocol packet to all network slice control plane processing units corresponding to the network slices sharing the uplink port and the VLAN. If the destination address of the protocol packet is a unicast address, the protocol packet is only sent to the network slice control plane processing unit corresponding to the network slice to which the VLAN belongs. Herein, the network slice control plane processing unit that receives the protocol packet may continue subsequent processing process for the protocol packet.

The embodiments of the present disclosure support different network slices to be managed by using the same VLAN when the network slices share the uplink port. In this way, requirements for multiple network slices sharing the VLAN to run layer-3 service are met, which saves bandwidth overhead to the greatest extent, and improves processing efficiency.

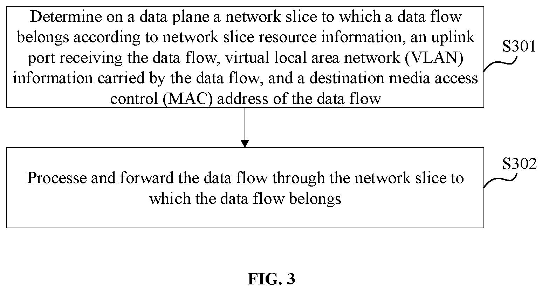

FIG. 3 is a flowchart of a data processing method based on network slices according to an embodiment of the present disclosure. As shown in FIG. 3, the method provided in this embodiment includes the following steps.

In step S301, a network slice to which a data flow belongs is determined on a data plane according to network slice resource information, an uplink port receiving the data flow, VLAN information carried by the data flow, and a destination MAC address of the data flow.

In step S302, the data flow is processed and forwarded through the network slice to which the data flow belongs.

Herein, different network slices sharing a VLAN on a shared uplink port are configured with different layer-3 interface MAC addresses in the network slice resource information.

In an exemplary embodiment, step S301 may include steps as follows. A network slice to which the uplink port receiving the data flow belongs is determined according to the network slice resource information. When the uplink port is shared by at least two network slices, the VLAN information is extracted from the data flow, and whether a VLAN indicated by the VLAN information is shared by at least two network slices is determined according to the network slice resource information. When the VLAN is shared by at least two network slices, the destination MAC address is extracted from the data flow, and the network slice to which the data flow belongs is determined according to the network slice resource information, the VLAN information, and the destination MAC address.

In this exemplary embodiment, step S301 may further include: when the uplink port is exclusive to one network slice, it is determined that the data flow belongs to the network slice which the uplink port is exclusive to.

In this exemplary embodiment, step S301 may further include: when the VLAN indicated by the VLAN information carried by the data flow belongs to only one network slice, it is determined that the data flow belongs to the network slice to which the VLAN belongs.

In this exemplary embodiment, the step that when the VLAN is shared by at least two network slices, the destination MAC address is extracted from the data flow, and the network slice to which the data flow belongs is determined according to the network slice resource information, the VLAN information, and the destination MAC address, may include the steps as follows. When the VLAN is shared by at least two network slices, one network slice to which the VLAN belongs is recorded, and the destination MAC address is extracted from the data flow. When a network slice corresponding to the VLAN information and the destination MAC address is matched in the network slice resource information, it is determined that the data flow belongs to the matched network slice. When no network slice corresponding to the VLAN and the destination MAC address is matched in the network slice resource information, it is determined that the data flow belongs to the recorded network slice to which the VLAN belongs. Herein, in a configuration process, on the shared uplink port, different VLANs are assigned (or allocated) to different network slices, and a VLAN is assigned to be shared by at least two network slices (that is, one VLAN is first allocated to one network slice, and then the VLAN is assigned to be shared so that other network slices may also use the VLAN on the shared port). Therefore, on the shared uplink port, the network slice to which the VLAN belongs is the network slice assigned to the VLAN, and whether the VLAN is shared by at least two network slices may be determined according to whether the VLAN is assigned to be shared.

In an exemplary embodiment, the method of this embodiment may further include the steps as follows. When layer-3 service is enabled, a list of network slices that share an uplink port and a VLAN indicated by the VLAN information is determined on a control plane according to the network slice resource information, the uplink port corresponding to a protocol packet from the data plane and the VLAN information carried by the protocol packet. When the protocol packet is a broadcast or multicast protocol packet, the protocol packet is copied, and the protocol packet is processed through the network slices listed in the list of network slices. The broadcast or multicast protocol packets are copied and sent on the control plane, which can save bandwidth overhead and improve processing efficiency.

In this exemplary embodiment, the method of this embodiment may further include: when the protocol packet is a unicast protocol packet, the protocol packet is processed through a network slice to which the VLAN indicated by the VLAN information carried in the protocol packet belongs. Herein, the network slice to which the VLAN belongs is the network slice assigned to the VLAN.

In an exemplary embodiment, the network slice resource information may include: information of the network slice to which the uplink port belongs, information of the VLAN used on the shared uplink port by different network slices, information of the VLAN shared by different network slices, and the layer-3 interface MAC addresses corresponding to different network slices that share the VLAN on the shared uplink port.

The relevant description of the method provided in this embodiment may refer to the relevant description of the foregoing embodiments with respect to the apparatus, which will not be repeated here.

In summary, the method according to the embodiments of the present disclosure can support the network slices sharing an uplink port to use the same VLAN to manage network elements , and thus achieve the effect that different network slice sharing the uplink port uses the same VLAN to run layer-3 service, which saves bandwidth overhead to the greatest extent and improves processing efficiency.

In addition, embodiments of the present disclosure also provide a computer-readable storage medium storing a computer program that, when executed, causes a processor to perform the steps of the data processing method as described above, for example, the steps shown in FIG. 3.

A person of ordinary skill in the art can understand that all or some of the steps, system, functional modules/units of the device in the methods disclosed above may be implemented as software, firmware, hardware, and appropriate combinations thereof. In a hardware implementation, the division between functional modules/units mentioned in the above description does not necessarily correspond to the division of physical components. For example, a physical component may have multiple functions, or a function or step may be performed by several physical components cooperatively. Some or all of the components may be implemented as software executed by a processor, such as a digital signal processor or a microprocessor, or as hardware, or as an integrated circuit, such as an application specific integrated circuit. Such software may be distributed on a computer-readable medium, and the computer-readable medium may include a computer storage medium (or a non-transitory medium) and a communication medium (or a transitory medium). As is well known to those of ordinary skill in the art, the term computer storage medium includes volatile and non-volatile, removable and non-removable medium implemented in any method or technology for storing information (such as computer-readable instructions, data structures, program modules, or other data). Computer storage medium include but are not limited to a random access memory (RAM), a read-only memory (ROM), an electrically erasable programmable read-only memory (EEPROM), a flash memory or other memory technologies, a compact disc read-only memory (CD-ROM), a digital video disc (DVD) or other optical disk storage, a magnetic cassette, a magnetic tape, a magnetic disk storage or other magnetic storage devices, or any other medium used to store desired information and that may be accessed by a computer. In addition, as well known to those of ordinary skill in the art, communication medium usually contain a computer-readable instruction, a data structure, a program module, or other data in a modulated data signal such as a carrier wave or other transmission mechanisms, and may include any information delivery medium.

## Claims

1. A data processing method based on network slices, the method comprising the steps of:
determining (301), by a forwarding plane network slice identification unit (B), on a data plane a network slice to which a data flow belongs according to network slice resource information, an uplink port receiving the data flow, virtual local area network, VLAN, information carried by the data flow, and a destination media access control, MAC, address of the data flow; wherein the network slice resource information comprises different layer-3 interface MAC addresses with which different network slices sharing a VLAN on a shared uplink port are configured;
processing and forwarding (302), by a network slice forwarding plane processing unit (D), the data flow through the network slice to which the data flow belongs;
wherein the step of determining (301) on the data plane the network slice to which the data flow belongs according to the network slice resource information, the uplink port receiving the data flow, the VLAN information carried by the data flow, and the destination MAC address of the data flow, comprises the steps of:
determining a network slice to which the uplink port receiving the data flow belongs according to the network slice resource information; and
extracting the VLAN information from the data flow, and determining whether a VLAN indicated by the VLAN information is shared by at least two network slices according to the network slice resource information, in response to the uplink port being shared by at least two network slices; and
extracting the destination MAC address from the data flow, and determining the network slice to which the data flow belongs according to the network slice resource information, the VLAN information, and the destination MAC address, in response to the VLAN being shared by at least two network slices;
wherein the step of extracting the destination MAC address from the data flow, and determining the network slice to which the data flow belongs according to the network slice resource information, the VLAN information, and the destination MAC address, in response to the VLAN being shared by at least two network slices, comprises the steps of:
recording one network slice to which the VLAN belongs, and extracting the destination MAC address from the data flow, in response to the VLAN being shared by at least two network slices; and
determining that the data flow belongs to the matched network slice, in response to matching a network slice corresponding to the VLAN information and the destination MAC address in the network slice resource information; and
determining that the data flow belongs to the recorded network slice to which the VLAN belongs, in response to matching no network slice corresponding to the VLAN and the destination MAC address in the network slice resource information.

2. The method according to claim 1, wherein the step of determining (301) on the data plane the network slice to which the data flow belongs according to the network slice resource information, the uplink port receiving the data flow, the VLAN information carried by the data flow, and the destination MAC address of the data flow, further comprises the step of:
determining that the data flow belongs to the network slice which the uplink port is exclusive to, in response to the uplink port being exclusive to one network slice.

3. The method according to claim 1 or 2, wherein the step of determining (301) on the data plane the network slice to which the data flow belongs according to the network slice resource information, the uplink port receiving the data flow, the VLAN information carried by the data flow, and the destination MAC address of the data flow, further comprises the step of:
determining that the data flow belongs to the network slice to which the VLAN belongs, in response to the VLAN indicated by the VLAN information belonging to only one network slice.

4. The method according to claim 1, further comprising:
determining on a control plane a list of network slices that share an uplink port and a VLAN indicated by VLAN information according to the network slice resource information, the uplink port corresponding to a protocol packet from the data plane and the VLAN information carried by the protocol packet, in response to layer-3 service being enabled;
copying the protocol packet, and processing the protocol packet through the network slices listed in the list of network slices, in response to the protocol packet being a broadcast or multicast protocol packet.

5. The method according to claim 1 or 4, further comprising:
processing the protocol packet through a network slice to which the VLAN indicated by the VLAN information carried in the protocol packet belongs, in response to the protocol packet being a unicast protocol packet.

6. The method according to any one of claims 1 to 5, wherein the network slice resource information comprises: information of the network slice to which the uplink port belongs, and information of the VLAN used on the shared uplink port by different network slices, information of the VLAN shared by different network slices, and the layer-3 interface MAC addresses corresponding to different network slices that share the VLAN on the shared uplink port.

7. A data processing apparatus based on network slices, comprising:
a forwarding plane network slice identification unit (B) configured to determine on a data plane a network slice to which a data flow belongs according to network slice resource information, an uplink port receiving the data flow, VLAN information carried by the data flow, and the destination MAC address of the data flow; and
a plurality of network slice forwarding plane processing units (D), one of which corresponds to the network slice to which the data flow belongs and is configured to process and forward the data flow;
wherein different network slices sharing a VLAN on a shared uplink port are configured with different layer-3 interface MAC addresses in the network slice resource information;
wherein the forwarding plane network slice identification unit (B) is further configured to: determine a network slice to which the uplink port receiving the data flow belongs according to the network slice resource information; extract the VLAN information from the data flow, and determine whether a VLAN indicated by the VLAN information is shared by at least two network slices according to the network slice resource information, in response to the uplink port being shared by at least two network slices; extract the destination MAC address from the data flow, and determine the network slice to which the data flow belongs according to the network slice resource information, the VLAN information, and the destination MAC address, in response to the VLAN being shared by at least two network slices;
wherein the forwarding plane network slice identification unit (B) is further configured to: record one network slice to which the VLAN belongs, and extract the destination MAC address from the data flow, in response to the VLAN being shared by at least two network slices; determine that the data flow belongs to the matched network slice, in response to matching a network slice corresponding to the VLAN information and the destination MAC address in the network slice resource information; determine that the data flow belongs to the recorded network slice to which the VLAN belongs, in response to matching no network slice corresponding to the VLAN and the destination MAC address in the network slice resource information.

8. A computer-readable storage medium, storing a computer program which, when executed by a processor of a data processing apparatus according to claim 8, causes said apparatus to perform all the steps of a method according to any one of claims 1 to 6.

## Patentansprüche

1. Datenverarbeitungsverfahren, das auf Netzwerk-Slices basiert, wobei das Verfahren die folgenden Schritte umfasst:
Bestimmen (301), durch eine Weiterleitungsebenen-Netzwerk-Slice-Identifikationseinheit (B), auf einer Datenebene eines Netzwerk-Slices, zu dem ein Datenfluss gehört, gemäß Netzwerk-Slice-Ressourceninformationen, einem Uplink-Port, der den Datenfluss empfängt, virtuellen lokaler Netzwerk-, VLAN, Informationen, die von dem Datenfluss übermittelt werden, und einer Ziel-Medienzugangssteuerungs-, MAC, Adresse des Datenflusses; wobei die Netzwerk-Slice-Ressourceninformationen verschiedene Layer-3-Schnittstellen-MAC-Adressen umfassen, mit denen verschiedene Netzwerk-Slices konfiguriert sind, die sich ein VLAN auf einem gemeinsamen Uplink-Port teilen;
Verarbeiten und Weiterleiten (302), durch eine Netzwerk-Slice-Weiterleitungsebenenverarbeitungseinheit (D), des Datenflusses durch das Netzwerk-Slice, zu dem der Datenfluss gehört;
wobei der Schritt vom Bestimmen (301) auf der Datenebene des Netzwerk-Slices, zu dem der Datenfluss gehört, gemäß den Netzwerk-Slice-Ressourceninformationen, dem Uplink-Port, der den Datenfluss empfängt, der VLAN-Informationen, die vom Datenfluss übermittelt werden, und der Ziel-MAC-Adresse des Datenflusses die folgenden Schritte umfasst:
Bestimmen eines Netzwerk-Slices, zu dem der Uplink-Port, der den Datenfluss empfängt, gemäß den Netzwerk-Slice-Ressourceninformationen gehört; und
Extrahieren der VLAN-Informationen aus dem Datenfluss und Bestimmen, ob ein durch die VLAN-Informationen angegebenes VLAN gemäß den Netzwerk-Slice-Ressourceninformationen durch mindestens zwei Netzwerk-Slices abgegrenzt wird, als Reaktion darauf, dass der Uplink-Port durch mindestens zwei Netzwerk-Slices abgegrenzt wird; und
Extrahieren der Ziel-MAC-Adresse aus dem Datenfluss und Bestimmen des Netzwerk-Slices, zu dem der Datenfluss gehört, gemäß den Netzwerk-Slice-Ressourceninformationen, den VLAN-Informationen und der Ziel-MAC-Adresse, als Reaktion darauf, dass das VLAN von mindestens zwei Netzwerk-Slices gemeinsam genutzt wird;
wobei der Schritt vom Extrahieren der Ziel-MAC-Adresse aus dem Datenfluss und Bestimmen des Netzwerk-Slices, zu dem der Datenfluss gehört, gemäß den Netzwerk-Slice-Ressourceninformationen, den VLAN-Informationen und der Ziel-MAC-Adresse, als Reaktion darauf, dass das VLAN von mindestens zwei Netzwerk-Slices gemeinsam genutzt wird, die folgenden Schritte umfasst:
Aufzeichnen eines Netzwerk-Slices, zu dem das VLAN gehört, und Extrahieren der Ziel-MAC-Adresse aus dem Datenfluss, als Reaktion darauf, dass das VLAN von mindestens zwei Netzwerk-Slices gemeinsam genutzt wird; und
Bestimmen, dass der Datenfluss zum übereinstimmenden Netzwerk-Slice gehört, als Reaktion darauf, dass es mit einem Netzwerk-Slice übereinstimmt, das den VLAN-Informationen und der Ziel-MAC-Adresse in den Netzwerksegmentressourceninformationen entspricht; und
Bestimmen, dass der Datenfluss zum aufgezeichneten Netzwerk-Slice gehört, zu dem das VLAN gehört, als Reaktion darauf, dass es mit keinem Netzwerk-Slice übereinstimmt, das dem VLAN und der Ziel-MAC-Adresse in den Netzwerksegmentressourceninformationen entspricht.

2. Verfahren nach Anspruch 1, wobei der Schritt vom Bestimmen (301) auf der Datenebene des Netzwerk-Slices, zu dem der Datenfluss gehört, gemäß den Netzwerk-Slice-Ressourceninformationen, dem Uplink-Port, der den Datenfluss empfängt, den VLAN-Informationen, die vom Datenfluss übermittelt werden, und der Ziel-MAC-Adresse des Datenflusses weiter den Schritt umfasst:
Bestimmen, dass der Datenfluss zum Netzwerk-Slice gehört, für das der Uplink-Port exklusiv ist, als Reaktion darauf, dass der Uplink-Port exklusiv für ein Netzwerk-Slice ist.

3. Verfahren nach Anspruch 1 oder 2, wobei der Schritt vom Bestimmen (301) auf der Datenebene des Netzwerk-Slices, zu dem der Datenfluss gehört, gemäß den Netzwerk-Slice-Ressourceninformationen, dem Uplink-Port, der den Datenfluss empfängt, den VLAN-Informationen, die vom Datenfluss übermittelt werden, und der Ziel-MAC-Adresse des Datenflusses weiter den Schritt umfasst:
Bestimmen, dass der Datenfluss zu dem Netzwerk-Slice gehört, zu dem das VLAN gehört, als Reaktion darauf, dass das VLAN, das durch die VLAN-Informationen angegeben wird, nur zu einem Netzwerk-Slice gehört.

4. Verfahren nach Anspruch 1, weiter umfassend:
Bestimmen, auf einer Steuerungsebene, einer Liste von Netzwerk-Slices, die einen Uplink-Port und ein VLAN, das von VLAN-Informationen gemäß den Netzwerk-Slice-Ressourceninformationen angegeben wird, gemeinsam nutzen, dem Uplink-Port, der einem Protokollpaket aus der Datenebene entspricht, und den VLAN-Informationen, die vom Protokollpaket transportiert werden, als Reaktion darauf, dass ein Layer-3-Dienst aktiviert wird;
Kopieren des Protokollpakets und Verarbeiten des Protokollpakets durch die in der Liste der Netzwerk-Slices aufgeführten Netzwerk-Slices, als Reaktion darauf, dass das Protokollpaket ein Broadcast- oder Multicast-Protokollpaket ist.

5. Verfahren nach Anspruch 1 oder 4, weiter umfassend:
Verarbeiten des Protokollpakets über ein Netzwerk-Slice, zu dem das VLAN gehört, das von den VLAN-Informationen angegeben wird, die in dem Protokollpaket übermittelt werden, als Reaktion darauf, dass das Protokollpaket ein Unicast-Protokollpaket ist.

6. Verfahren nach einem der Ansprüche 1 bis 5, wobei die Netzwerk-Slice-Ressourceninformationen Folgendes umfassen: Informationen über das Netzwerk-Slice, zu dem der Uplink-Port gehört, und Informationen über das VLAN, das von verschiedenen Netzwerk-Slices auf dem gemeinsam genutzten Uplink-Port verwendet wird, Informationen über das von verschiedenen Netzwerk-Slices gemeinsam genutzte VLAN und die Layer-3-Schnittstellen-MAC-Adressen, die verschiedenen Netzwerk-Slices entsprechen, die das VLAN auf dem gemeinsam genutzten Uplink-Port gemeinsam nutzen.

7. Datenverarbeitungseinrichtung, die auf Netzwerk-Slices basiert, umfassend:
eine Weiterleitungsebenen-Netzwerk-Slice-Identifikationseinheit (B), die dazu konfiguriert ist, auf einer Datenebene ein Netzwerk-Slice, zu dem ein Datenfluss gehört, gemäß Netzwerk-Slice-Ressourceninformationen, einem Uplink-Port, der den Datenfluss empfängt, VLAN-Informationen, die vom Datenfluss übermittelt werden, und der Ziel-MAC-Adresse des Datenflusses zu bestimmen; und
eine Vielzahl von Netzwerk-Slice-Weiterleitungsebenen-Verarbeitungseinheiten (D), von denen eine dem Netzwerk-Slice entspricht, zu dem der Datenfluss gehört, und so konfiguriert ist, dass sie den Datenfluss verarbeitet und weiterleitet;
wobei verschiedene Netzwerk-Slices, die ein VLAN auf einem gemeinsam genutzten Uplink-Port gemeinsam nutzen, mit verschiedenen Layer-3-Schnittstellen-MAC-Adressen in den Netzwerk-Slice-Ressourceninformationen konfiguriert sind;
wobei die Weiterleitungsebenen-Netzwerk-Slice-Identifikationseinheit (B) weiter konfiguriert ist zum: Bestimmen eines Netzwerk-Slices, zu dem der Uplink-Port gehört, der den Datenfluss empfängt, gemäß den Netzwerk-Slice-Ressourceninformationen; Extrahieren der VLAN-Informationen aus dem Datenfluss und Bestimmen, ob ein VLAN, das von den VLAN-Informationen angegeben wird, von mindestens zwei Netzwerk-Slices gemeinsam genutzt wird, gemäß den Netzwerk-Slice-Ressourceninformationen, als Reaktion darauf, dass der Uplink-Port von mindestens zwei Netzwerk-Slices gemeinsam genutzt wird; Extrahieren der Ziel-MAC-Adresse aus dem Datenfluss und Bestimmen des Netzwerk-Slices, zu dem der Datenfluss gehört, gemäß den Netzwerk-Slice-Ressourceninformationen, den VLAN-Informationen und der Ziel-MAC-Adresse, als Reaktion darauf, dass das VLAN von mindestens zwei Netzwerk-Slices gemeinsam genutzt wird;
wobei die Weiterleitungsebenen-Netzwerk-Slice-Identifikationseinheit (B) weiter konfiguriert ist zum: Aufzeichnen eines Netzwerk-Slices, zu dem das VLAN gehört, und Extrahieren der Ziel-MAC-Adresse aus dem Datenfluss, als Reaktion darauf, dass das VLAN von mindestens zwei Netzwerk-Slices gemeinsam genutzt wird; Bestimmen, dass der Datenfluss zu dem übereinstimmenden Netzwerk-Slice gehört, als Reaktion darauf, dass es mit einem Netzwerk-Slice übereinstimmt, das den VLAN-Informationen und der Ziel-MAC-Adresse in den Netzwerk-Slice-Ressourceninformationen entspricht; Bestimmen, dass der Datenfluss zu dem aufgezeichneten Netzwerk-Slice gehört, zu dem das VLAN gehört, als Reaktion darauf, dass es mit keinem Netzwerk-Slice übereinstimmt, das dem VLAN und der Ziel-MAC-Adresse in den Netzwerk-Slice-Ressourceninformationen entspricht.

8. Computerlesbares Speichermedium, das ein Computerprogramm speichert, das, wenn es von einem Prozessor einer Datenverarbeitungseinrichtung nach Anspruch 8 ausgeführt wird, die Einrichtung veranlasst, alle Schritte eines Verfahrens nach einem der Ansprüche 1 bis 6 durchzuführen.

## Revendications

1. Procédé de traitement de données basé sur des tranches de réseau, le procédé comprenant les étapes de :
détermination (301), par l'intermédiaire d'une unité d'identification de tranche de réseau de plan de transfert (B), sur un plan de données une tranche de réseau à laquelle appartient un flux de données en fonction d'informations de ressource de tranche de réseau, d'un port de liaison montante recevant le flux de données, des informations de réseau local virtuel (VLAN) acquises par l'intermédiaire du flux de données et une adresse de contrôle d'accès aux ressources, MAC, de destination du flux de données ; dans lequel les informations de ressource de tranche de réseau comprennent différentes adresses MAC d'interface de couche 3 avec lesquelles différentes tranches de réseau partageant un VLAN sur un port de liaison montante partagé sont configurées ;
traitement et transmission (302), par l'intermédiaire d'une unité de traitement de plan de transmission de tranche de réseau (D), du flux de données à travers la tranche de réseau à laquelle appartient le flux de données ;
dans lequel l'étape de détermination (301) sur le plan de données de la tranche de réseau à laquelle appartient le flux de données en fonction des informations de ressource de la tranche de réseau, du port de liaison montante recevant le flux de données, des informations de VLAN acquises par l'intermédiaire du flux de données et de l'adresse MAC de destination du flux de données comprend les étapes de :
détermination d'une tranche de réseau à laquelle appartient le port de liaison montante recevant le flux de données en fonction des informations de ressource de tranche de réseau ; et
extraction des informations de VLAN à partir du flux de données et détermination si un VLAN indiqué par les informations de VLAN est délimité par au moins deux tranches de réseau selon les informations de ressource de tranche de réseau, en réponse au port de liaison montante étant partagé par au moins deux tranches de réseau ;
extraction de l'adresse MAC de destination à partir du flux de données, et détermination de la tranche de réseau à laquelle appartient le flux de données en fonction des informations de ressource de tranche de réseau, des informations de VLAN et de l'adresse MAC de destination, en réponse au VLAN étant partagé par au moins deux tranches de réseau ;
dans lequel l'étape d'extraction de l'adresse MAC de destination à partir du flux de données et de détermination de la tranche de réseau à laquelle appartient le flux de données en fonction des informations de ressource de tranche de réseau, des informations de VLAN et de l'adresse MAC de destination, lorsque le VLAN est partagé par au moins deux tranches de réseau, comprend les étapes de :
enregistrement d'une tranche de réseau à laquelle appartient le VLAN et extraction de l'adresse MAC de destination à partir du flux de données, en réponse au VLAN étant partagé par au moins deux tranches de réseau ; et
détermination que le flux de données appartient à la tranche de réseau correspondante, en réponse à la correspondance d'une tranche de réseau avec les informations de VLAN et l'adresse MAC de destination dans les informations de ressource de tranche de réseau ; et
détermination que le flux de données appartient à la tranche de réseau enregistrée à laquelle appartient le VLAN, en réponse à l'absence de correspondance entre la tranche de réseau correspondant au VLAN et l'adresse MAC de destination dans les informations de ressource de tranche de réseau.

2. Procédé selon la revendication 1, dans lequel l'étape de détermination (301) sur le plan de données de la tranche de réseau à laquelle appartient le flux de données en fonction des informations de ressource de tranche de réseau, du port de liaison montante recevant le flux de données, des informations de VLAN acquises par l'intermédiaire flux de données et de l'adresse MAC de destination du flux de données, comprend en outre l'étape de :
détermination que le flux de données appartient à la tranche de réseau par rapport à laquelle le port de liaison montante est exclusif, en réponse au port de liaison montante étant exclusif à une certaine tranche de réseau.

3. Procédé selon la revendication 1 ou 2, dans lequel l'étape de détermination (301) sur le plan de données de la tranche de réseau à laquelle appartient le flux de données en fonction des informations de ressource de tranche de réseau, du port de liaison montante recevant le flux de données, des informations de VLAN acquises par l'intermédiaire du flux de données et de l'adresse MAC de destination du flux de données, comprend en outre l'étape de :
détermination que le flux de données appartient à la tranche de réseau à laquelle appartient le VLAN, en réponse au VLAN indiqué par les informations de VLAN appartenant à une seule tranche de réseau.

4. Procédé selon la revendication 1, comprenant en outre :
la détermination sur un plan de contrôle d'une liste de tranches de réseau qui partagent un port de liaison montante et un VLAN indiqué par des informations de VLAN selon des informations de ressource de tranche de réseau, le port de liaison montante correspondant à un paquet de protocole en provenance du plan de données et aux informations de VLAN transportées par le paquet de protocole, en réponse à l'activation du service de couche 3 ;
la copie du paquet de protocole et le traitement du paquet de protocole à travers les tranches de réseau répertoriées dans la liste de tranches de réseau, en réponse au paquet de protocole étant un paquet de protocole de diffusion ou de multidiffusion.

5. Procédé selon la revendication 1 ou 4, comprenant en outre :
le traitement du paquet de protocole via une tranche de réseau à laquelle appartient le VLAN indiqué par les informations VLAN acquises dans le paquet de protocole, en réponse au paquet de protocole étant un paquet de protocole de diffusion individuelle.

6. Procédé selon l'une quelconque des revendications 1 à 5, dans lequel les informations de ressource de tranche de réseau comprennent : les informations sur la tranche de réseau à laquelle appartient le port de liaison montante, et les informations sur le VLAN utilisé sur le port de liaison montante partagé par différentes tranches de réseau, les informations sur le VLAN partagé par différentes tranches de réseau, et les adresses MAC d'interface de couche 3 correspondant aux différentes tranches de réseau qui partagent le VLAN sur le port de liaison montante partagé.

7. Appareil de traitement de données sur la base de tranches de réseau, comprenant :
une unité d'identification de tranche de réseau de plan de transfert (B) configurée pour déterminer sur un plan de données une tranche de réseau à laquelle appartient un flux de données en fonction d'informations de ressource de tranche de réseau, d'un port de liaison montante recevant le flux de données, d'informations VLAN transmises par le flux de données et de l'adresse MAC de destination du flux de données ; et
une pluralité d'unités de traitement de plan de transfert de tranche de réseau (D), dont une certaine correspond à la tranche de réseau à laquelle appartient le flux de données et est configurée pour traiter et transférer le flux de données ;
dans lequel différentes tranches de réseau partageant un VLAN sur un port de liaison montante partagé sont configurées avec des adresses MAC d'interface de couche 3 différentes dans les informations de ressource de tranche de réseau ;
dans lequel l'unité d'identification de tranche de réseau de plan de transfert (B) est en outre configurée pour : déterminer une tranche de réseau à laquelle appartient le port de liaison montante recevant le flux de données en fonction des informations de ressource de tranche de réseau ; extraire les informations de VLAN à partir du flux de données et déterminer si un VLAN indiqué par les informations de VLAN est partagé par au moins deux tranches de réseau en fonction des informations de ressource de tranche de réseau, en réponse au port de liaison montante étant partagé par au moins deux tranches de réseau ; extraire l'adresse MAC de destination à partir du flux de données et déterminer la tranche de réseau à laquelle appartient le flux de données en fonction des informations de ressource de tranche de réseau, des informations de VLAN et de l'adresse MAC de destination, en réponse au VLAN étant partagé par au moins deux tranches de réseau ;
dans lequel l'unité d'identification de tranche de réseau de plan de transfert (B) est en outre configurée pour : enregistrer une tranche de réseau à laquelle appartient le VLAN et extraire l'adresse MAC de destination à partir du flux de données, en réponse au VLAN étant partagé par au moins deux tranches de réseau ; déterminer que le flux de données appartient à la tranche de réseau correspondante, en réponse à la correspondance d'une tranche de réseau correspondant aux informations de VLAN et de l'adresse MAC de destination dans les informations de ressource de tranche de réseau ; déterminer que le flux de données appartient à la tranche de réseau enregistrée à laquelle appartient le VLAN, en réponse à aucune tranche de réseau ne correspondant au VLAN et à l'adresse MAC de destination dans les informations de ressource de tranche de réseau.

8. Support de stockage lisible par ordinateur, stockant un programme informatique qui, lorsqu'il est exécuté par un processeur d'un appareil de traitement de données selon la revendication 8, amène ledit appareil à effectuer toutes les étapes d'un procédé selon l'une quelconque des revendications 1 à 6.
